# EUROPÄISCHE PATENTSCHRIFT

(11) **EP 3 965 411 B1**
(45) Veröffentlichungstag und Bekanntmachung des Hinweises auf die Patenterteilung: **01.10.2025**
(21) Anmeldenummer: 21192209.1
(22) Anmeldetag: 19.08.2021
(51) Int. Cl.: H04N 23/54, H04N 23/45, H04N 23/57, B64G 1/66, B64G 1/10, G01C 11/02, G01C 21/24

(54) **DETEKTOR, OPTOELEKTRONISCHES BILDAUFNAHMESYSTEM UND RAUMFLUGKÖRPER ZUR BILDAUFNAHME**
DETECTOR, OPTOELECTRONIC IMAGING SYSTEM AND SPACECRAFT FOR IMAGING
DÉTECTEUR, SYSTÈME OPTOÉLECTRONIQUE D'IMAGERIE ET VÉHICULE SPATIAL D'IMAGERIE

(30) Priorität: 03.09.2020 DE 102020123064
(43) Veröffentlichungstag der Anmeldung: 09.03.2022
(73) Patentinhaber: Jena Optronik GmbH, 07745 Jena (DE)
(72) Erfinder: Schmidt, Uwe, 07616 Bürgel (DE); Berger, Reinhard, 07743 Jena (DE); Zintl, Andreas, 99310 Arnstadt (DE)
(74) Vertreter: Ege Lee & Roider Patentanwälte

(56) Entgegenhaltungen:
- DE-A1- 10 108 324
- JP-A- 2013 138 222
- US-A- 5 510 623
- US-A1- 2003 117 493
- US-A1- 2007 188 610
- US-A1- 2012 273 913
- US-A1- 2014 139 643
- US-A1- 2017 265 822

## Beschreibung

Die Erfindung betrifft ein optoelektronisches Bildaufnahmesystem sowie einen Raumflugkörper mit einem optoelektronischen Bildaufnahmesystem.

Optoelektronische Bildaufnahmesysteme werden beispielsweise im Bereich der Raumfahrt zur Erdbeobachtung eingesetzt. Typischerweise weisen solche Bildaufnahmesysteme eine Optik, einen Detektor in einer Bildebene und eine Elektronik auf. Für die hochauflösende Erdbeobachtung ist die Kombination von mehreren Detektoren notwendig. Üblicherweise sind die Detektoren als Zeile mit entsprechender Auflösung ausgeführt. Je nach Anwendung können auch mehrere Detektorzeilen miteinander kombiniert werden, um einen größeren Bereich mit größerer Schwadbreite aufnehmen zu können. Hierbei ist es notwendig, dass sich die Detektoren im Randbereich, insbesondere in Längsrichtung, überdecken bzw. überlappen. Auf der Bildebene bzw. Fokalebene ("Focal Plane Assembly", FPA) können daher mehrere Zeilendetektoren als Array angeordnet sein. Die Detektoren haben üblicherweise eine rechteckige Gehäusebauform bzw. ein rechteckiges Trägersubstrat. Aufgrund der rechteckige Gehäusebauform und dem notwendigen Überlapp ist zwischen den Detektorzeilen ungenutzte Fläche. Dadurch hat die Bildebene bzw. die Fokalebene eine entsprechend große Flächenausdehnung. Das hat zur Folge, dass größere Optiken notwendig sind, um die gesamte Bildebene bzw. Fokalebene abdecken bzw. belichten zu können. Insbesondere in der Luft- und Raumfahrt spielen Größe und Gewicht eine signifikante Rolle.

Ein weiteres Merkmal der hochauflösenden Erdbeobachtung sind die hohen Datenraten aufgrund der hohen Anzahl von Pixeln bei einer hohen Zeilenrate. Die vorverarbeiteten Pixelinformationen werden typischerweise über ein digitales Interface weiterverarbeitet.

Bei hochauflösenden Sensoren werden üblicherweise unterschiedliche Spektralbereiche untersucht. Jede Detektorzeile kann hierbei für einen gesonderten Spektralbereich optimiert sein. Die bisherigen Lösungen können jedoch nur eine vergleichsweise geringe Anzahl an Spektralkanälen abbilden, da die benötigte Anzahl der Spektralkanäle bzw. Detektorzeilen nicht nebeneinander mit hinreichenden Pixel-Überlappungsbereichen auf der Trägerplatte innerhalb des Abbildungsbereiches der Optik in der Bildebene angeordnet werden können. Zusätzlich erschwerend wirkt sich die sehr hohe Anzahl an Pins aus, die sowohl für die Steuerung der Sensoren als auch für die Digitalisierung der Pixeldaten verwendet werden müssen. Aufgrund der geringen Integrationsdichte kann auch die galvanische Trennung erst auf der peripheren Elektronik erfolgen. Dies führt oft zu Einbußen in der Performance Beispielsweise offenbart die US 2014/139643 A1 ein Bildgeberarray als Teil eines Bildgebungssystems, wobei das Bildgeberarray mehrere Infrarotbildgebungsmodule umfasst, die jeweils mehrere Infrarotsensoren enthalten, die einem optischen Element zugeordnet sind. Weiterer technologischer Hintergrund kann der JP 2013 138222 A, US 2012/273913 A1 und US 2017/265822 A1 entnommen werden. Die US 5 510 623 A beschreibt einen dentalen Röntgenbildsensor, der eine ladungsgekoppelte Auslesevorrichtung aufweist. Die DE 101 08 324A1 beschreibt eine Fokalebenenplatte für eine hochauflösende Kamera mit lichtempfindlichen Halbleitersensoren. Die US 2003/117493 A1 beschreibt ein Optoelektronisches Bildaufnahmesystem für einen Raumflugkörper, welches Objekte im sichtbaren Wellenbereich auf eine Vielzahl von CCD-Detektorzeilen fokussiert. Die US 2007/188610 A1 beschreibt ein flächendeckendes Fernerkundungssystem, aufweisend mehrere, auf einer luftgestützten Plattform montierte Sensoren.

Der Erfindung liegt Aufgabe zugrunde, ein eingangs genanntes optoelektronisches Bildaufnahmesystem strukturell und/oder funktionell zu verbessern. Außerdem liegt der Erfindung die Aufgabe zugrunde, einen eingangs genannten Raumflugkörper zur Bildaufnahme strukturell und/oder funktionell zu verbessern.

Insbesondere liegt der Erfindung die Aufgabe zugrunde, ein optoelektronisches Bildaufnahmesystem, insbesondere zur Erdbeobachtung, kompakter auszugestalten sowie die Fläche der Bildebene bzw. Fokalebene zu verkleinern. Eine weitere Aufgabe der Erfindung ist es, die Integrationsdichte, insbesondere auf der Bildebene bzw. Fokalebene, zu erhöhen sowie die Performance zu verbessern.

Die Aufgabe wird gelöst mit einem optoelektronischen Bildaufnahmesystem mit den Merkmalen des Anspruchs 1. Außerdem wird die Aufgabe gelöst mit einem Raumflugkörper mit den Merkmalen des Anspruchs 23. Vorteilhafte Ausführungen und/oder Weiterbildungen sind Gegenstand der Unteransprüche.

Der Detektor kann zur Bildaufnahme dienen. Der Detektor kann für ein optoelektronisches Bildaufnahmesystem sein oder dort angeordnet sein. Der Detektor kann für einen Raumflugkörper sein oder dort angeordnet sein. Der Detektor kann zur Erdbeobachtung, insbesondere zur hochauflösenden Erdbeobachtung, sein. Der Detektor kann eine Detektorzeile sein.

Der Detektor weist ein Trägersubstrat auf. Das Trägersubstrat kann ein Gehäuse sein oder als Gehäuse ausgebildet sein. Das Trägersubstrat kann eine Hybridstruktur oder ein Hybridgehäuse sein. Der Detektor kann ein optoelektronisches Element aufweisen. Das optoelektronische Element kann an und/oder auf dem Trägersubstrat angeordnet sein. Das optoelektronische Element kann in dem als Gehäuse ausgebildeten Trägersubstrat angeordnet sein. Das Trägersubstrat weist zumindest einen Endbereich oder Ende auf. Das Trägersubstrat kann zwei in Längsrichtung gegenüberliegende Endbereiche oder Enden aufweisen. Zumindest in einem Endbereich des Trägersubstrats ist zumindest eine schräg zur Längsrichtung des Trägersubstrats verlaufende Seitenfläche vorgesehen. Das Trägersubstrat kann zumindest eine Abschrägung aufweisen. Die zumindest eine schräg verlaufende Seitenfläche kann die zumindest eine Abschrägung des Trägersubstrats ausbilden oder definieren. Zumindest eine Seite und/oder Kante des Trägersubstrats kann, insbesondere in einem Endbereich des Trägersubstrats, abgeschrägt sein. Es können zwei Seiten, wie Seitenflächen, und/oder Kanten des Trägersubstrats, insbesondere in einem Endbereich des Trägersubstrats, abgeschrägt sein. Die beiden Seitenflächen des Trägersubstrats können jeweils in den beiden gegenüberliegenden Endbereichen des Trägersubstrats jeweils abgeschrägt sein. Dadurch können zur Längsrichtung des Trägersubstrats schräg verlaufende Seitenflächen gebildet sein. Dies kann eine kompaktere Anordnung bei entsprechendem Überlapp von Detektoren ermöglichen. Die Fläche der Bildebene bzw. Fokalebene (FPA-Fläche) kann dadurch minimiert werden.

Soweit nichts anderes angegeben oder es sich aus dem Zusammenhang nichts anderes ergibt, bezieht sich die Angabe "Längsrichtung" auf eine Richtung der längsten Ausdehnung bzw. Erstreckung des Trägersubstrats und die Angabe "Querrichtung" auf eine zur Längsrichtung senkrechte und, insbesondere bezüglich des Trägersubstrats, horizontale Richtung. Die Längsrichtung kann eine Längserstreckung des Trägersubstrats und/oder Detektors sein. Die Längsrichtung kann in der Horizontalen bzw. Horizontalebene liegen. Eine "Längsachse" kann sich in Längsrichtung erstrecken. Die Längsachse kann eine Symmetrieachse des Detektors und/oder des Trägersubstrats sein, beispielsweise eine Symmetrieachse in der Horizontalebene und/oder horizontalen Schnittebene des Detektors und/oder des Trägersubstrats. Die Längsrichtung kann durch eine Ausrichtung und/oder Längserstreckung zumindest einer Pixelzeile des Detektors definiert sein. Die Längsrichtung kann parallel zur Ausrichtung und/oder Längserstreckung zumindest einer Pixelzeile des Detektors sein. Die Querrichtung kann sich auf eine Richtung der kürzesten Ausdehnung bzw. Erstreckung des Trägersubstrats in der Horizontalen bzw. Horizontalebene beziehen. Die Querrichtung kann in der Horizontalen bzw. Horizontalebene liegen. Eine "Querachse" kann sich in Querrichtung und damit senkrecht zur Längsrichtung erstrecken. Die Querrichtung kann senkrecht zur Ausrichtung und/oder Längserstreckung zumindest einer Pixelzeile des Detektors sein. Beispielsweise kann die Längsrichtung in eine Richtung der längsten Erstreckung des Trägersubstrats verlaufen und/oder senkrecht zur Querrichtung verlaufen, wobei die Querrichtung in eine Richtung der kürzesten Erstreckung des Trägersubstrats verlaufen kann.

Die zumindest eine schräg verlaufende Seitenfläche des Trägersubstrats kann nach innen abfallend sein. Die zumindest eine schräg verlaufende Seitenfläche kann schräg zur Längsachse des Trägersubstrats angeordnet sein. Eine Erstreckungsrichtung der zumindest einen schräg verlaufenden Seitenfläche kann mit der Längsrichtung und/oder Längsachse des Trägersubstrats einen Winkel einschließen. Der Winkel kann zwischen 0° und 90°, insbesondere zwischen 0° und 45°, vorzugsweise zwischen 10° und 30° liegen. Beispielsweise kann der Winkel etwa 15° betragen. Die Erstreckungsrichtung kann im Wesentlichen parallel zur Horizontalen, insbesondere des Trägersubstrats, sein.

Zumindest ein Endbereich des Trägersubstrats ist im, die Querachse aufweisenden Längsschnitt gesehen, verjüngt. Zumindest ein Endbereich des Trägersubstrats kann, insbesondere im, die Querachse aufweisenden Längsschnitt gesehen, trapezförmig, dreieckförmig oder kegelförmig ausgebildet sein. Zumindest ein Endbereich des Trägersubstrats kann, insbesondere im, die Querachse aufweisenden Längsschnitt gesehen, trapezförmig, dreieckförmig oder kegelförmig verjüngt sein. Zumindest ein Endbereich des Trägersubstrats kann, insbesondere im, die Querachse aufweisenden Längsschnitt gesehen, im Wesentlichen die Form eines rechtwinkligen oder gleichschenkligen Trapezes aufweisen. Zumindest ein Endbereich des Trägersubstrats kann, insbesondere im, die Querachse aufweisenden Längsschnitt gesehen, im Wesentlichen die Form eines gleichseitigen oder gleichschenkligen Dreiecks aufweisen. Zumindest ein Endbereich des Trägersubstrats kann als Spitze oder spitzenförmig ausgebildet sein.

Zumindest in einem Endbereich des Trägersubstrats können zwei schräg zur Längsrichtung des Trägersubstrats verlaufende Seitenflächen vorgesehen sein. Die beiden schräg verlaufenden Seitenflächen des Trägersubstrats können, insbesondere in Querrichtung des Trägersubstrats, gegenüberliegend angeordnet sein. Die beiden schräg verlaufenden Seitenflächen des Trägersubstrats können nach innen abfallend sein. Insbesondere können die beiden schräg verlaufenden Seitenflächen des Trägersubstrats zum Ende des Trägersubstrats hin nach innen abfallend sein. Die beiden in Längsrichtung gegenüberliegenden Endbereiche des Trägersubstrats können jeweils zwei schräg zur Längsrichtung des Trägersubstrats verlaufende Seitenflächen aufweisen.

Zumindest in einem Endbereich oder zumindest an einem Ende des Trägersubstrats kann das Trägersubstrat eine Befestigungsstruktur zum Befestigen des Detektors an einer Trägerplatte oder einem Gehäuse aufweisen. Die beiden in Längsrichtung gegenüberliegenden Endbereiche oder Enden des Trägersubstrats können jeweils eine Befestigungsstruktur aufweisen. Die Befestigungsstruktur kann eine Bohrung zur Aufnahme eines Befestigungsmittels, wie eine Schraube oder einen Stift, aufweisen. Die Befestigungsstruktur kann stufenartig ausgebildet sein.

Das optoelektronische Element kann sich im Wesentlichen in Längsrichtung des Trägersubstrats erstrecken. Das optoelektronische Element kann ein lichtempfindlicher Chip sein. Das optoelektronische Element kann ein CMOS Chip sein und/oder eine aktive Pixeltechnik aufweisen. Das optoelektronische Element kann ein CCD-Chip, eine Fotodiode oder dergleichen sein.

Das optoelektronische Element kann ein zeilenförmiger lichtempfindlicher Chip sein. Das optoelektronische Element weist in seiner Längsrichtung und/oder in Längsrichtung des Trägersubstrats, eine Zeile, wie Pixelzeile, mit einer Vielzahl von Pixeln auf. Die Längsrichtung des optoelektronischen Elements kann parallel zu der Längsrichtung des Trägersubstrats sein. Das optoelektronische Element kann beispielsweise zwischen 1000 und 30000 Pixel, insbesondere zwischen 5000 und 25000 Pixel, vorzugsweise ca. 10000 oder ca. 20000 Pixel als Pixelzeile aufweisen. Das optoelektronische Element kann eine Anzahl von, insbesondere in seiner Querrichtung und/oder in Querrichtung des Trägersubstrats, parallel zueinander angeordneten Subzeilen, wie Subpixelzeilen, mit jeweils einer Vielzahl von Pixeln aufweisen. Die Querrichtung des optoelektronischen Elements kann parallel zu der Querrichtung des Trägersubstrats sein. Das optoelektronische Element kann beispielsweise eine einer Potenz von 2 entsprechende Anzahl, insbesondere bis zu 512 oder 1024, Subzeilen aufweisen. Die Pixelzeile kann eine Vielzahl von Subpixelzeilen aufweisen. Die Subzeilen können, insbesondere im Betrieb des Detektors, für eine nacheinander zeitversetzte Belichtung und/oder, insbesondere spaltenweise, Aufintegration der durch Belichtung entstandenen elektrischen Ladungen dienen oder benutzt werden. Dadurch kann die Empfindlichkeit des Detektors erhöht und/oder das Signal-Rausch-Verhältnis verbessert werden. Dieses Verfahren wird "Time Delay and Integration" (kurz: TDI) genannt. Der Detektor kann dazu ausgebildet und/oder eingerichtet sein, das TDI-Verfahren anzuwenden und/oder auszuführen. Die Subzeilen können so ausgebildet und eingerichtet sein, um, beispielsweise nacheinander, zeitversetzt belichtet zu werden. Der Detektor kann so ausgebildet sein, dass die Subzeilen, beispielsweise nacheinander, zeitversetzt belichtet werden können. Der Detektor und/oder eine Signalverarbeitungs- und/oder Ausleseschaltung des Detektors kann dazu ausgebildet sein, die in den Subzeilen durch Belichtung entstandenen elektrischen Ladungen spaltenweise zu integrieren, insbesondere aufzuintegrieren.

Der Detektor kann ein Filterelement aufweisen. Das Filterelement kann sich in Längsrichtung des Trägersubstrats erstrecken. Das Filterelement kann direkt auf dem optoelektronischen Element angeordnet sein. Dadurch kann Streulicht und/oder optische Reflexionen minimiert werden. Das Filterelement kann von dem optoelektronischen Element beabstandet angeordnet sein. Diese Anordnung ist fehlertoleranter hinsichtlich Oberflächendefekten, insbesondere auf dem Filterelement. Das Filterelement kann zum optoelektronischen Element einen Abstand aufweisen. Dabei kann es sich um einen definierten und/oder zuvor festgelegten Abstand handeln. Das Filterelement kann ein Spektralfilter und/oder Bandpassfilter sein. Zwischen dem Filterelement und dem optoelektronischen Element kann ein Ausgleichselement angeordnet sein. Das Ausgleichselement kann ein Füllstoff, insbesondere ein optisch transparenter Füllstoff, sein. Das Ausgleichselement und/oder der Füllstoff kann ein Kleber sein. Das Filterelement kann auf das optoelektronische Element aufgeklebt sein.

Der Detektor kann eine Signalverarbeitungs- und/oder Ausleseschaltung bzw. Ausleseelektronik aufweisen. Die Signalverarbeitungs- und/oder Ausleseschaltung kann zwischen dem optoelektronischen Element und dem Trägersubstrat angeordnet sein. Die Signalverarbeitungs- und/oder Ausleseschaltung kann, beispielsweise über eine Wafer-zu-Wafer-Verbindung, mit dem optoelektronischen Element wirksam verbunden sein. Die Signalverarbeitungs- und/oder Ausleseschaltung kann eine integrierte Signalverarbeitungs- und/oder Ausleseschaltung sein. Die Signalverarbeitungs- und/oder Ausleseschaltung kann ein "Read Out Integrated Circuit" (ROIC) sein. Die Signalverarbeitungs- und/oder Ausleseschaltung kann dazu ausgebildet sein, die im optoelektronischen Element durch Licht erzeugten analogen elektrischen Signale zu digitalen Signalen zu wandeln und/oder weiterzuverarbeiten. Die Signalverarbeitungs- und/oder Ausleseschaltung kann mit dem Trägersubstrat, insbesondere fest, verbunden sein.

Der Detektor kann ein oder mehrere passive Schaltungselemente aufweisen. Die passiven Schaltungselemente können mit dem Trägersubstrat fest verbunden oder auf diesem angeordnet sein. Das eine oder die mehreren passiven Schaltungselemente können mit der Signalverarbeitungs- und/oder Ausleseschaltung wirksam, beispielsweise durch Bonden, wie Drahtbonden, verbunden sein.

Der Detektor kann zumindest ein elektrisches Modul zur, insbesondere elektrischen, Signalübertragung aufweisen. Der Detektor kann zumindest ein optisches Modul zur, insbesondere optischen, digitalen Signalübertragung aufweisen. Die Signalübertragung kann eine Datenübertragung sein. Das optische Modul kann ein "Optical Link Modul" oder "Optical Fiber Link" sein. Das elektrische Modul und/oder das optische Modul kann an dem Trägersubstrat angeordnet sein oder mit diesem fest verbunden sein. Das elektrische Modul und/oder das optische Modul kann im Wesentlichen unterhalb der Signalverarbeitungs- und/oder Ausleseschaltung angeordnet sein. Das elektrische Modul und/oder das optische Modul kann an der Unterseite des Detektors und/oder Trägersubstrats angeordnet sein. Durchbrüche für die elektrischen Module und/oder die optischen Module können reduziert werden. Dies ermöglicht eine größere Kontaktfläche, insbesondere an der Unterseite des Detektors und/oder Trägersubstrats, zum verbesserten Wärmeabtransport. Das elektrische Modul und/oder das optische Modul kann mit der Signalverarbeitungs- und/oder Ausleseschaltung wirksam, insbesondere elektrisch, verbunden sein. Die Signalverarbeitungs- und/oder Ausleseschaltung kann dazu ausgebildet sein, die im optoelektronischen Element durch Licht erzeugten elektrischen Signale zu verarbeiten und/oder zu wandeln und/oder weiterzuleiten. Die Signalverarbeitungs- und/oder Ausleseschaltung kann ein oder mehrere Analog-Digital-Wandler aufweisen. Das Trägersubstrat kann zumindest eine elektrische Verbindung, beispielsweise eine oder mehrere Leiterbahnen, aufweisen. Die Signalverarbeitungs- und/oder Ausleseschaltung kann mit der zumindest einen elektrischen Verbindung des Trägersubstrats, beispielsweise mittels einer elektrischen Verbindung, wie Bondverbindung, elektrisch verbunden sein. Das zumindest eine elektrische Modul und/oder das zumindest eine optische Modul kann mit der zumindest einen elektrischen Verbindung des Trägersubstrats wirksam, insbesondere elektrisch, verbunden sein. Die Signalverarbeitungs- und/oder Ausleseschaltung kann über die zumindest eine elektrische Verbindung des Trägersubstrats mit dem zumindest einen elektrischen Modul und/oder zumindest einen optischen Modul wirksam, insbesondere elektrisch, verbunden sein. Die Signalverarbeitungs- und/oder Ausleseschaltung kann dazu ausgebildet sein, die im optoelektronischen Element durch Licht erzeugten elektrischen Signale und/oder die gewandelten/verarbeiteten Signale über die elektrische Verbindung des Trägersubstrats an das zumindest eine elektrische Modul und/oder zumindest eine optische Modul weiterzuleiten. Das elektrische Modul und/oder das optische Modul kann zur analogen und/oder digitalen Signalverarbeitung und/oder Signalweiterleitung bzw. Signalübertragung ausgebildet sein. Das elektrische Modul und/oder das optische Modul kann ein Glasfaserelement, wie ein Glasfaseranschluss, ein Glasfaserkabel oder eine Lichtleitfaser, aufweisen. Das optische Modul kann dazu ausgebildet sein, Daten oder Signale über eine Glasfaser zu übertragen. Das optische Modul kann eine verbesserte Signalreichweite ermöglichen. Ferner ist eine reduzierte Kontaktierung bei dem Detektor möglich. Der Detektor und/oder das Trägersubstrat kann dazu ausgebildet sein, dass die elektrische Kontaktierung und/oder die Signale über die Unterseite des Detektors bzw. des Trägersubstrats zu- und/oder abgeführt werden können.

Der Detektor kann zumindest eine elektrische Kontaktierung aufweisen. Die elektrische Kontaktierung kann an der Unterseite des Detektors und/oder des Trägersubstrats angeordnet sein. Die elektrische Kontaktierung kann in einem, beispielsweise unteren, Randbereich und oder an einer, beispielsweise unteren, Kante, insbesondere des Trägersubstrats, angeordnet sein. Dadurch kann ein verbesserter Wärmetransport, insbesondere in der Mitte, des Trägersubstrats ermöglicht werden. Die elektrische Kontaktierung kann oder die elektrischen Kontaktierungen können bezüglich des Trägersubstrats und/oder einer Längsrichtung oder Querrichtung des Trägersubstrats symmetrisch oder asymmetrisch angeordnet sein. Die elektrische Kontaktierung kann oder die elektrischen Kontaktierungen können, insbesondere in Längsrichtung und/oder Querrichtung, versetzt zueinander angeordnet sein. Dadurch kann eine dichtere Anordnung von Detektoren ermöglicht werden.

Das Trägersubstrat kann im Querschnitt zumindest abschnittsweise im Wesentlichen U- und/oder H-förmig ausgebildet sein. Der Detektor und/oder das Trägersubstrat kann aus einer Keramik hergestellt sein. Das Trägersubstrat kann ein Keramiksubstrat sein. Der Detektor und/oder das Trägersubstrat mittels eines additiven Herstellungsverfahrens bzw. mittels 3D-Druck hergestellt sein. Dadurch kann die Geometrievielfalt erhöht werden. Auch können gedruckte Schaltungen und/oder Wärmeableitungen vorgesehen werden. Der Detektor und/oder das Trägersubstrat kann eine innen liegende Schaltung aufweisen. Der Detektor und/oder das Trägersubstrat kann eine Hochtemperatur-Mehrlagenkeramik ("High Temperature Cofired Ceramics", HTCC) aufweisen oder als Hochtemperatur-Mehrlagenkeramik ausgebildet sein. Der Detektor und/oder das Trägersubstrat kann eine keramische Folie aufweisen, die als Schaltungsträger eingesetzt werden kann. Der Detektor und/oder das Trägersubstrat kann eine Niedertemperatur-Einbrand-Keramik ("Low Temperature Cofired Ceramics", LTCC) aufweisen oder als Niedertemperatur-Einbrand-Keramik ausgebildet sein. Es kann somit der Bauraum, insbesondere für passive Bauelemente auf der Vorderseite des Detektors, reduziert werden. Der Detektor und/oder das Trägersubstrat kann einen gesinterten Keramikträger aufweisen. Der Detektor und/oder das Trägersubstrat kann integrierte Metallelemente aufweisen. Die Metallelemente können in einem Keramiksubstrat integriert sein. Die Metallelemente können Metallschichten oder Metallkerne sein. Die Metallelemente können zur Wärmeleitung und/oder Wärmeverteilung dienen. Dadurch kann eine gezielte Wärmeleitung ermöglicht und damit die Wärmeverteilung und -spreizung optimiert werden. Der Detektor und/oder das Trägersubstrat kann Kanäle, wie Mikrokanäle ("Micro Channel Heat Pipes"), aufweisen. Die Kanäle können als Wärmeleitung, insbesondere Wärmeableitung, dienen. Dadurch wird eine forcierte Ableitung von Verlustwärme ermöglicht.

Der Detektor kann ein Schutzelement, wie Schutzglas oder Schutzscheibe, aufweisen. Das Schutzelement kann an der Oberseite des Detektors und/oder des Trägersubstrats angeordnet sein. Das Schutzelement kann sich in Längsrichtung und/oder in Querrichtung des Trägersubstrats erstrecken. Das Schutzelement kann die Oberseite des Trägersubstrats teilweise oder vollständig abdecken. Das Schutzelement kann mit dem Trägersubstrat fest verbunden sein. Das Schutzelement kann oberhalb des optoelektronischen Elements angeordnet sein. Das Schutzelement kann optisch durchsichtig ausgebildet sein. Das Filterelement kann in dem Schutzelement integriert sein. Das Schutzelement kann zumindest einen optisch nicht durchlässigen Bereich aufweisen. Das Schutzelement kann zumindest einen optisch durchlässigen Bereich aufweisen. Das Schutzelement kann zumindest zwei optisch nicht durchlässige Bereiche und einen zwischen diesen angeordneten optisch durchlässigen Bereich aufweisen. Alternativ kann das Filterelement zwischen den beiden optisch nicht durchlässigen Bereichen des Schutzelements angeordnet sein. Der optisch durchlässige Bereich des Schutzelements kann oberhalb des optoelektronischen Elements angeordnet sein. Der optisch durchlässige Bereich des Schutzelements kann oberhalb des Filterelements angeordnet sein. Durch das Schutzelement können Verunreinigungen minimiert werden. Das Schutzelement kann als Schutz bei Fehlern in der Handhabung dienen.

Das optoelektronische Bildaufnahmesystem ist für einen Raumflugkörper. Das optoelektronische Bildaufnahmesystem kann zur Erdbeobachtung, insbesondere zur hochauflösenden Erdbeobachtung, sein. Das optoelektronische Bildaufnahmesystem weist eine Trägerplatte auf. Das optoelektronische Bildaufnahmesystem weist mehrere Detektoren auf. Die Detektoren können wie vorstehend und/oder nachfolgend beschrieben ausgebildet sein. Die Detektoren sind auf der Trägerplatte, insbesondere in einer Bildebene und/oder Fokalebene, angeordnet. Die Trägerplatte kann die Bildebene und/oder Fokalebene aufweisen oder definieren. Die Detektoren können auf der Trägerplatte innerhalb eines Abbildungsbereiches einer Optik in der Bildebene angeordnet sein.

Das optoelektronische Bildaufnahmesystem kann zumindest zwei Detektoren aufweisen. Die wenigstens zwei Detektoren können so auf der Trägerplatte angeordnet sein, dass sie sich in Längsrichtung zumindest abschnittsweise, insbesondere im Endbereich des Trägersubstrats, überlappen. Die wenigstens zwei Detektoren können so auf der Trägerplatte angeordnet sein, dass sich die Zeilen mit einer Vielzahl von Pixeln, wie Pixelzeilen, und/oder die Subzeilen mit jeweils einer Vielzahl von Pixeln, wie Subpixelzeilen, der zumindest zwei Detektoren in Längsrichtung zumindest abschnittsweise, insbesondere im Endbereich des Trägersubstrats, überlappen. Die wenigstens zwei Detektoren können so auf der Trägerplatte angeordnet sein, dass die Zeilen mit einer Vielzahl von Pixeln, wie Pixelzeilen, und/oder die Subzeilen mit jeweils einer Vielzahl von Pixeln, wie Subpixelzeilen, der zumindest zwei Detektoren in Querrichtung zumindest abschnittsweise, insbesondere im Endbereich des Trägersubstrats, hintereinander angeordnet sind. Die wenigstens zwei Detektoren können auf der Trägerplatte im Wesentlichen parallel zueinander und/oder in Längsrichtung im Wesentlichen hintereinander angeordnet sein. Beispielsweise können drei Detektoren in Längsrichtung im Wesentlichen hintereinander und/oder überlappend auf der Trägerplatte angeordnet sein. In Querrichtung können zwei oder mehr, beispielsweise sieben Detektoren auf der Trägerplatte angeordnet sein. In Querrichtung können die zwei oder mehr Detektoren auf der Trägerplatte im Wesentlichen parallel angeordnet sein. Das optoelektronische Bildaufnahmesystem kann somit beispielsweise eine Matrix von 21 Detektoren aufweisen, die eine Detektorgruppe bilden. Die Detektoren und/oder die Detektorgruppe und/oder die Pixelzeilen und/oder die Subpixelzeilen können dazu ausgebildet sein, unterschiedliche Spektralbereiche, insbesondere in unterschiedlichen Zeilen der Matrix, zu erfassen.

Das optoelektronische Bildaufnahmesystem kann eine auf den wenigstens einen Detektor und/oder auf eine Bildebene bzw. Fokalebene fokussierende Optik aufweisen. Die Optik kann dazu ausgebildet sein, auf einen einzelnen Detektor und/oder auf eine Gruppe von Detektoren zu fokussieren. Die Optik kann dazu ausgebildet sein, insbesondere zeitlich, nacheinander auf einzelne Detektoren zu fokussieren. Die Optik kann dazu ausgebildet sein, auf eine einzelne Pixelzeile des Detektors und/oder auf eine oder mehrere Subzeilen des Detektors zu fokussieren. Die Optik kann dazu ausgebildet sein, insbesondere zeitlich, nacheinander auf einzelne Pixelzeilen der Detektoren zu fokussieren. Die Optik kann dazu ausgebildet sein, insbesondere zeitlich, nacheinander auf einzelne oder mehrere Subzeilen eines Detektors oder mehrerer Detektoren zu fokussieren. Die Optik kann beispielsweise als Objektiv ausgebildet sein oder ein Objektiv aufweisen. Die Optik kann beispielsweise als Teleskop ausgebildet sein oder ein Teleskop aufweisen. Die Optik kann ein oder mehrere Linsen und/oder Spiegel aufweisen. Die Optik kann einen Tubus aufweisen. In dem Tubus können die ein oder mehrere Linsen und/oder Spiegel angeordnet sein. Die Optik kann einen Motor, wie Schrittmotor, zum Verstellen einer oder mehrerer Linsen und/oder Spiegel aufweisen. Die Optik kann dazu ausgebildet sein, einen definierten und/oder vorbestimmten Abbildungseffekt und/oder Abbildungsqualität zu erzielen. Die Optik kann ein oder mehrere Feldkorrektoren, wie Feldabflachungslinse oder Feldabflachungslinsenanordnung, bzw. "field-flattener" aufweisen. Der Feldkorrektor bzw. "field-flattener" kann dazu ausgebildet sein, die Bildfläche zu ebenen. Der Feldkorrektor bzw. "field-flattener" kann einer Linse, einer Linsenanordnung, einem Objektiv oder einem Teleskop nachgeschalten angeordnet sein und/oder vor dem wenigstens einen Detektor angeordnet sein. Der Feldkorrektor kann zur Bildfeldebnung dienen. Der Feldkorrektoren kann zur Verhinderung oder zumindest Reduzierung der Bildfeldwölbung, der Petzval-Krümmung und/oder sphärische Aberration dienen.

Das optoelektronische Bildaufnahmesystem kann einen Anschlussrahmen aufweisen. Der Anschlussrahmen kann an der Trägerplatte befestigt sein. Der Anschlussrahmen kann dazu ausgebildet sein, die Trägerplatte an der Optik zu fixieren. Das optoelektronische Bildaufnahmesystem kann eine Elektronik aufweisen. Die Elektronik kann unterhalb der Trägerplatte angeordnet sein. Die Elektronik kann auf der den Detektoren gegenüberliegenden Seite der Trägerplatte angeordnet sein. Das optoelektronische Bildaufnahmesystem kann zumindest eine isostatische Befestigung bzw. eine isostatische Aufhängung aufweisen. Die zumindest eine isostatische Aufhängung kann an der Trägerplatte, an dem Anschlussrahmen und/oder an der Elektronik befestigt sein. Die zumindest eine isostatische Aufhängung kann dazu ausgebildet sein, die Trägerplatte mit dem Anschlussrahmen zu verbinden. Die zumindest eine isostatische Aufhängung kann dazu ausgebildet sein, die Trägerplatte mit der Elektronik zu verbinden.

Ein Raumflugkörper weist wenigstens ein optoelektronisches Bildaufnahmesystem auf. Das wenigstens eine optoelektronische Bildaufnahmesystem kann wie vorstehend und/oder nachfolgend beschrieben ausgebildet sein. Der Raumflugkörper kann zur Erdbeobachtung, insbesondere zur hochauflösenden Erdbeobachtung, sein. Der Raumflugkörper kann ein Satellit, insbesondere künstlicher Satellit, beispielsweise ein Erdsatellit, eine Raumsonde, beispielsweise ein Orbiter, eine Rakete, eine Raumfähre, ein Raumschiff, ein Raumfahrzeug, eine Raumkapsel, eine Raumstation oder dergleichen sein. Der Raumflugkörper kann dazu ausgebildet sein, sich im Weltraum zu bewegen oder dorthin gebracht zu werden. Der Raumflugkörper kann ein Weltraumflugkörper sein. Der Raumflugkörper kann dazu ausgebildet sein, in eine Erdumlaufbahn gebracht zu werden und/oder sich in einer Erdumlaufbahn fortzubewegen und/oder zu schweben. Der Raumflugkörper kann einen Antrieb, wie Raketenantrieb, wie Brems- und/oder Steuerdüsen, oder dergleichen, aufweisen.

Zusammenfassend und mit anderen Worten dargestellt ergibt sich somit unter anderem ein Detektor mit integrierter Analog-Digital-Wandlung, für die hochauflösende Erdbeobachtung. Der Detektor kann eine Detektorzeile mit Subzeilen für die nacheinander zeitversetzte Belichtung und Aufintegration von durch Belichtung erzeugten elektrischen Ladungen ("Time Delay and Integration"-Verfahren) sein. Das Licht kann durch einen spektralen Filter auf einen lichtempfindlichen Chip des Detektors gelangen. Als Ausgleichselement kann zwischen dem Filter und dem lichtempfindlichen Chip ein optisch transparenter Füllstoff, z.B. Kleber, vorgesehen sein. Der lichtempfindliche Chip kann mit einer integrierten Signalverarbeitungs- und/oder Ausleseschaltung, wie einem "Read Out Integrated Circuit" (ROIC), beispielsweise durch eine Wafer-zu-Wafer-Verbindung verbunden sein. Die integrierte Signalverarbeitungs- und/oder Ausleseschaltung kann integrierte Analog-Digital-Wandler aufweisen. Die integrierte Signalverarbeitungs- und/oder Ausleseschaltung kann mit dem Gehäuse, wie Hybridgehäuse, des Detektors verbunden sein. Das Gehäuse kann ein Substrat, wie Keramiksubstrat, aufweisen. Das Keramiksubstrat kann zumindest teilweise innenliegende Schaltungen aufweisen, beispielsweise realisiert durch eine Hochtemperatur-Mehrlagenkeramik ("High Temperature Cofired Ceramics", HTCC) und/oder eine Niedertemperatur-Einbrand-Keramik ("Low Temperature Cofired Ceramics", LTCC). Der Bauraum kann dadurch für passive Bauelemente auf der Vorderseite des Detektors reduziert werden. Die Keramik kann 3D gedruckt sein, um eine Geometrievielfalt, gedruckte Schaltungen und/oder Wärmeableitungen zu ermöglichen. Das Keramiksubstrat kann integrierte Metallanteile, wie Schichten oder Kerne, aufweisen, wodurch die Wärmeverteilung und -spreizung durch gezielte Wärmeleitung optimiert werden kann. Zur forcierten Ableitung von Wärme können Mikrokanäle, wie "Micro Channel Heat Pipes", vorgesehen sein. Auf oder in dem Gehäuse und/oder Substrat können passive Schaltungselemente und/oder optische Module, wie Glasfasermodule, "Optical-Link-Module" oder "Optical-Fiber-Links", untergebracht sein. Die optischen Module können eine serielle Datenübertragung über Glasfasern ermöglichen. Ein Einsatz von optischen Modulen kann die Signalreichweite im Vergleich zur elektrischen Datenübertragung verbessern. Ferner können die Kontaktierungen bei der Detektorzeile reduziert werden. Die optischen Module bzw. "Optical Links" können zur Datenübertragung auf der Rückseite des Detektors angeordnet sein. Daher muss keine Faserverlegung auf der Frontfläche des Detektors erfolgen. Die Anzahl der Durchbrüche für die optischen Module kann minimiert sein. Dadurch kann ein verbesserter Wärmetransport durch eine größere Kontaktfläche erfolgen. Die elektrische Kontaktierung und/oder die vorzugsweise optischen Signale können über die Unterseite des Detektors zu- und/oder abgeführt werden. Die elektrische Kontaktierung kann im Randbereich des Detektors realisiert sein. Die elektrische Kontaktierung kann symmetrisch oder asymmetrisch am Detektor realisiert sein. Eine asymmetrische Ausführung kann eine dichtere Anordnung der Detektoren ermöglichen. Ferner kann ein verbesserter Wärmetransport in der Mitte des Keramikträgers realisiert sein. Der Spektralfilter kann sowohl direkt auf dem lichtempfindlichen Chip integriert sein aber auch mit einem definierten Abstand. Während bei einer direkten Integration des Filters die optischen Streueffekte, z.B. durch Streulicht oder optische Reflexe, innerhalb des Detektors minimiert werden, ist der Aufbau durch einen definierten Abstand vorteilhafter hinsichtlich möglicher Oberflächendefekte auf dem Filter. Der Detektor kann ein Schutzglas aufweisen, wodurch Verunreinigungen minimiert werden können und ein Schutz bei Fehlern im Handling ermöglicht werden kann. Am Ende der Detektorzeile kann eine oder mehrere Abschrägungen vorhanden sein. Die Abschrägung kann beispielsweise an einer, zwei oder mehr Kanten der Detektorzeile realisiert sein. Alle Seiten des Detektors können abgeschrägt sein. Ein oder mehr Detektoren können auf einer Bildebene bzw. Fokalebene, wie "Focal Plane Assembly" (FPA) angeordnet sein. Aufgrund der Abschrägungen am Ende der Detektorzeile können die Detektoren durch entsprechenden Überlapp deutlich dichter angeordnet werden, d.h., die Detektorzeilen sind bei entsprechendem Überlapp enger zusammengerückt. Die FPA-Fläche kann dadurch minimiert werden. Ein Bildaufnahmesystem kann eine Trägerplatte, einen Anschlussrahmen, eine Elektronik und eine isostatische Aufhängung aufweisen. Mittels der isostatischen Aufhängung können die Trägerplatte, der Anschlussrahmen und die Elektronik miteinander verbunden sein. Auf der Trägerplatte können mehrere Detektoren angeordnet sein.

Mit der Erfindung wird ein optoelektronisches Bildaufnahmesystem kompakter ausgestaltet. Die Bildebene bzw. Fokalebene wird verkleinert und effizienter ausgenutzt. Die Integrationsdichte auf der Bildebene bzw. Fokalebene wird erhöht und die Performance verbessert.

Nachfolgend werden Ausführungsbeispiele der Erfindung unter Bezugnahme auf Figuren näher beschrieben, dabei zeigen schematisch und beispielhaft:
- Fig. 1: eine perspektivische Ansicht eines Detektors;
- Fig. 2: eine perspektivische Ansicht von unten des Detektors gemäß Fig. 1;
- Fig. 3: eine perspektivische Schnittansicht eines Detektors;
- Fig. 4: eine vergrößere Schnittansicht des Detektors gemäß Fig. 3;
- Fig. 5: eine schematische Schnittansicht eines Detektors;
- Fig. 6: eine Anordnung von drei Detektoren;
- Fig. 7: ein optoelektronisches Bildaufnahmesystem; und
- Fig. 8: schematisch einen Raumflugkörper.

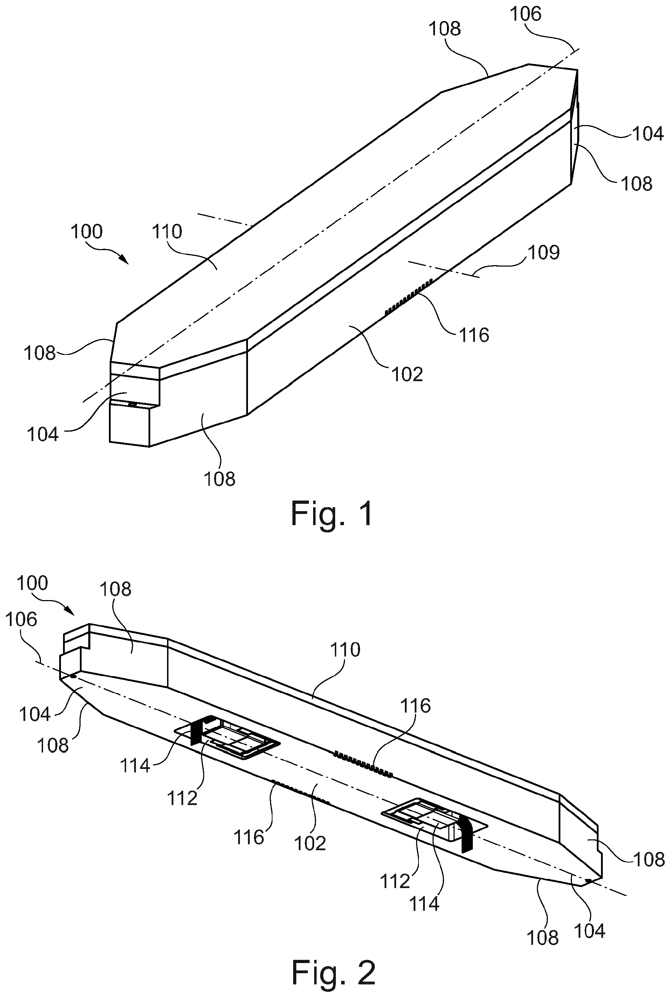

Fign. 1 und 2 zeigen einen Detektor 100 zur Bildaufnahme, insbesondere zur hochauflösenden Erdbeobachtung. Der Detektor 100 kann in einem optoelektronischen Bildaufnahmesystem angeordnet werden, das in einem Raumflugkörper angeordnet ist. Der Detektor 100 weist ein aus einer Keramik hergestelltes Trägersubstrat 102 als Gehäuse auf. Am Trägersubstrat 102 bzw. im Gehäuse ist ein als lichtempfindlicher Chip ausgebildetes optoelektronisches Element (in Fig. 1 und 2 nicht dargestellt) angeordnet. Das Trägersubstrat 102 weist zwei gegenüberliegende Endbereiche 104 auf. In den Endbereichen 104 weist das Trägersubstrat 102 jeweils zwei schräg zur Längsrichtung 106 des Trägersubstrats 102 verlaufende Seitenflächen 108 auf. Die schräg verlaufenden Seitenflächen 108 sind nach innen abfallend. Im jeweiligen Endbereich 104 des Trägersubstrats 102 sind die beiden Seitenflächen 108 bezüglich der Längsrichtung 106 gegenüberliegend angeordnet und verjüngen sich, insbesondere im, die Querachse 109 aufweisenden Längsschnitt gesehen, als dreieckförmige Spitze nach außen.

Der Detektor weist ferner ein Schutzglas 110 auf, das an der Oberseite des Trägersubstrats 102 angeordnet ist. Das Schutzglas 110 kann einen Spektralfilter aufweisen, welcher über dem lichtempfindlichen Chip angeordnet ist. An der Unterseite des Trägersubstrats 102 sind zwei Durchbrüche 112 vorhanden, in denen als Optical-Link-Modul ausgebildete optische Module 114 angeordnet sind. Die optischen Module 114 weisen einen Glasfaseranschluss zur digitalen Signalübertragung auf. An den beiden unteren Kanten des Trägersubstrats 102 ist jeweils eine elektrische Kontaktierung 116 angebracht. Die beiden elektrischen Kontaktierungen 116 sind im Wesentlichen mittig angeordnet.

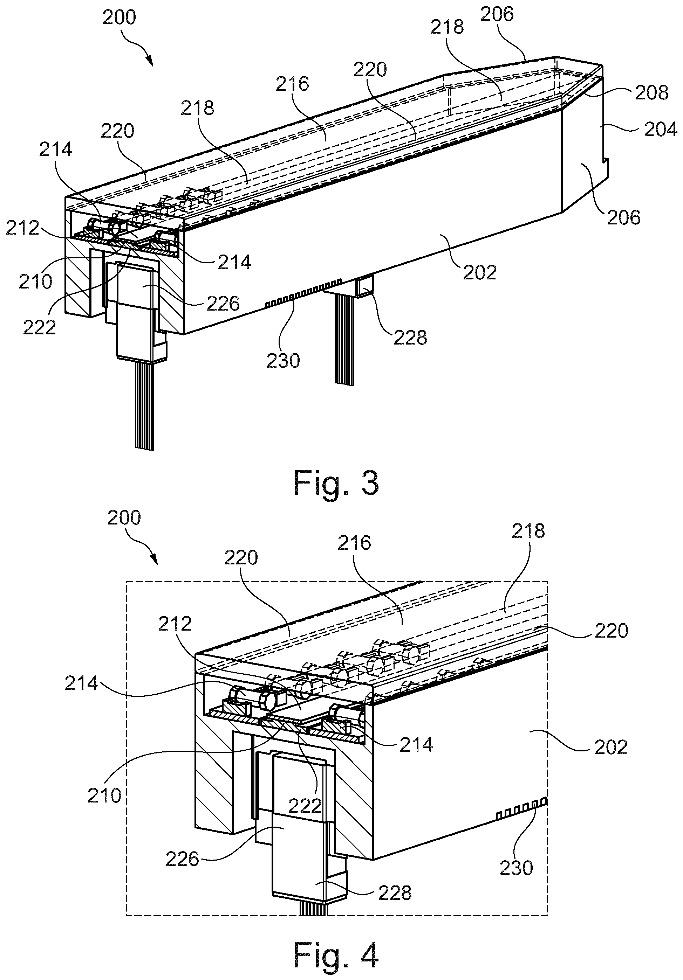

Fign. 3 und 4 zeigen einen zu dem Detektor 100 gemäß Fig. 1 und 2 ähnlich ausgebildeten Detektor 200 in einer perspektivischen Schnittansicht. Der Detektor 200 weist ebenfalls ein aus einer Keramik hergestelltes Trägersubstrat 202 als Gehäuse auf. Das Trägersubstrat 202 ist im Querschnitt abschnittsweise im Wesentlichen H-förmig und/oder U-förmig ausgebildet. Zumindest in einem Endbereich 204 des Trägersubstrats 202 sind zwei bezüglich der Längsrichtung des Trägersubstrats 202 gegenüberliegend angeordnete schräg verlaufende Seitenflächen 206 vorhanden, die nach innen abfallend sind. Der Endbereich 204 weist daher eine Abschrägung auf. Die beiden schräg verlaufenden Seitenflächen 206 sind in Querrichtung des Trägersubstrats 202 gegenüberliegend angeordnet. Im Endbereich 204 des Trägersubstrats 202 verjüngen sich, im, die Querachse aufweisenden Längsschnitt gesehen, die beiden schräg verlaufenden Seitenflächen 206 trapezförmig nach außen. Im vorliegenden Ausführungsbeispiel bilden die beiden schrägen Seitenflächen 206 im Endbereich 204 des Trägersubstrats 202, im, die Querachse aufweisenden Längsschnitt gesehen, im Wesentlichen die Form eines gleichschenkligen Trapezes 208.

Der Detektor 200 weist ferner ein am Trägersubstrat 202 in Längsrichtung angeordnetes optoelektronisches Element 210 auf. Das optoelektronische Element 210 ist ein lichtempfindlicher Chip. Auf dem lichtempfindlichen Chip 210 ist mittels eines optisch transparenten Klebers ein Spektralfilter 212 aufgeklebt. Der Spektralfilter 212 ist damit direkt, ohne wesentlichen Abstand auf dem lichtempfindlichen Chip angebracht. Unterhalb des lichtempfindlichen Chips 210 ist eine als "Read Out Integrated Circuit" (ROIC) ausgebildete integrierte Signalverarbeitungs- und Ausleseschaltung 222 angeordnet. Die integrierte Signalverarbeitungs- und Ausleseschaltung 222 ist mit dem lichtempfindlichen Chip 210 mittels einer Wafer-zu-Wafer-Verbindung wirksam verbunden. Neben dem Verbund von lichtempfindlichem Chip 210 und integrierter Signalverarbeitungs- und Ausleseschaltung 222 sind passive Schaltungselemente 214 angeordnet. Die passiven Schaltungselemente 214 sind mit der integrierten Signalverarbeitungs- und Ausleseschaltung 222, beispielsweise mittels Bonden, wirksam verbunden. Beabstandet oberhalb des Spektralfilters 212 ist ein Schutzglas 216 am Trägersubstrat 202 befestigt. Das Schutzglas 216 ist als Schutzscheibe ausgebildet und in einem inneren Bereich 218 optisch durchlässig und in einem äußeren Bereich 220 optisch undurchlässig. Der innere Bereich 218 des Schutzglases 216 befindet sich oberhalb des lichtempfindlichen Chips 210 und des Spektralfilters 212. Der äußere Bereich 220 des Schutzglases 216 befindet sich oberhalb der passiven Schaltungselemente 214. Das Schutzglas 216 ist der Form des Trägersubstrats 202 angepasst. Das Licht gelangt durch das Schutzglas 216 und durch den Spektralfilter 212 auf den lichtempfindlichen Chip 210. Die integrierte Signalverarbeitungs- und Ausleseschaltung 222, der lichtempfindliche Chip 210, der Spektralfilter 212 und die passiven Schaltungselemente 214 sind in einem im Querschnitt U-förmigen Abschnitt des Trägersubstrats 202 angeordnet und das Schutzglas 216 oberhalb an den Schenkeln des U-förmigen Abschnitts befestigt.

Unterhalb der integrierten Signalverarbeitungs- und Ausleseschaltung 222 weist der Detektor Durchbrüche 224 auf, in denen optische Module 226 angeordnet sind. Die optischen Module 226 sind als Optical-Link-Modul ausgebildet und weisen einen Glasfaseranschluss 228 zur digitalen Signalübertragung auf. Die integrierte Signalverarbeitungs- und Ausleseschaltung 222 ist mit den optischen Modulen 226 wirksam verbunden. Im unteren Randbereich des Trägersubstrats sind ferner elektrische Kontaktierungen 230 vorgesehen.

Im Übrigen wird ergänzend insbesondere auf Fign. 1 und 2 sowie die zugehörige Beschreibung verwiesen.

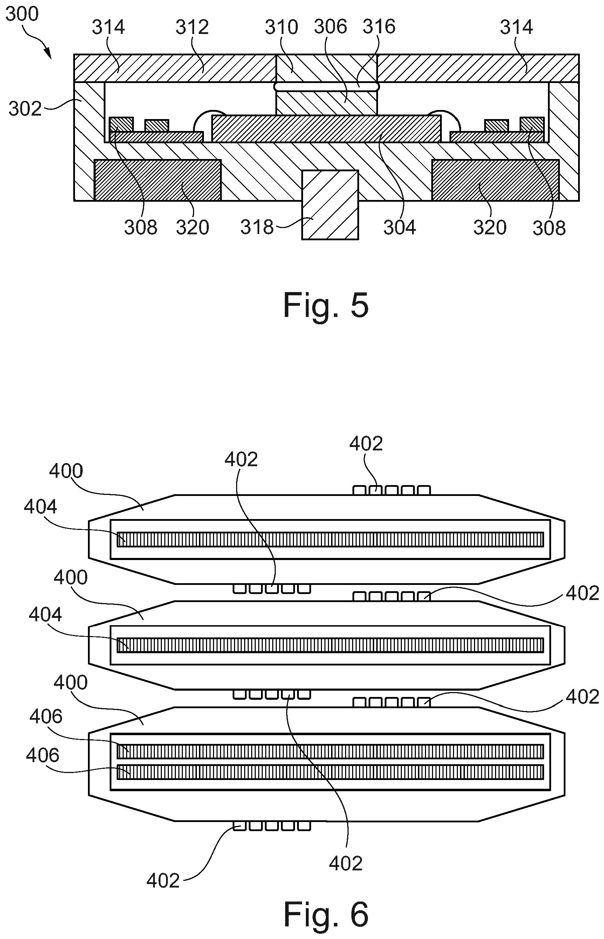

Fig. 5 zeigt schematisch einen Querschnitt eines Detektors 300. Der Detektor 300 weist ein als Trägersubstrat ausgebildetes Keramiksubstrat 302 auf. Auf dem Keramiksubstrat 302 ist eine integrierte Signalverarbeitungs- und Ausleseschaltung 304 angeordnet und mit dem Keramiksubstrat 302 verbunden. Die integrierte Signalverarbeitungs- und Ausleseschaltung 304 ist als "Read Out Integrated Circuit" (ROIC) ausgebildet. Auf der integrierten Signalverarbeitungs- und Ausleseschaltung 304 ist ein lichtempfindlicher Chip 306 angeordnet. Der lichtempfindliche Chip 306 ist mit der integrierten Signalverarbeitungs- und Ausleseschaltung 304 mit einer Wafer-zu-Wafer-Verbindung wirksam verbunden. Neben (in Fig. 5 links und rechts) der integrierten Signalverarbeitungs- und Ausleseschaltung 304 sind passive Schaltungselemente 308, wie SMD-Bauteile, angeordnet, die mittels Drahtbonden mit der integrierten Signalverarbeitungs- und Ausleseschaltung 304 wirksam verbunden sind.

Oberhalb des lichtempfindlichen Chips 306 ist ein Spektralfilter 310 mit einem definierten Abstand beabstandet angeordnet. Der Spektralfilter ist Teil einer Schutzscheibe 312, die am Keramiksubstrat 302 befestigt ist. Die Schutzscheibe 312 weist neben (in Fig. 5 links und rechts) dem Spektralfilter 210 zwei optisch undurchlässige Bereiche 314 auf, die als Abdeckung dienen. Im Bereich zwischen Spektralfilter 310 und dem lichtempfindlichen Chip 306 ist ein optisch transparenter Füllstoff 316, z.B. Kleber, vorhanden. An der Unterseite des Keramiksubstrats 302 sind ein Anschluss 318 und optische Anschlussmodule 320, wie Optical Fiber Links und/oder Optical Link Module, vorhanden. Die elektrische Kontaktierung und die optischen Signale können so über die Unterseite zu- und/oder abgeführt werden.

Im Übrigen wird ergänzend insbesondere auf Fign. 1 bis 4 sowie die zugehörige Beschreibung verwiesen.

In Fig. 6 ist eine Anordnung von drei Detektoren 400 schematisch dargestellt. Die Detektoren 400 können wie vorstehend und/oder nachfolgend beschrieben ausgebildet sein und in einer Bildebene oder Fokalebene eines Bildaufnahmesystems angeordnet sein. Die Detektoren 400 sind in Querrichtung nebeneinander angeordnet. Jeder Detektor 400 weist zwei elektrische Kontaktierungen 402 auf. Die elektrischen Kontaktierungen 402 sind an einem, insbesondere unteren und/oder seitlichen, Randbereich des jeweiligen Detektors 400 angeordnet. Die elektrischen Kontaktierungen 402 eines Detektors 400 sind bezüglich des Detektors 400 bzw. dessen Längsrichtung gegenüberliegend angeordnet. Jeweils eine elektrische Kontaktierungen 402 ist damit an einer Längsseite des jeweiligen Detektors 400 angeordnet. Wie in Fig. 6 zu erkennen ist, sind die elektrischen Kontaktierungen 402, insbesondere in Längsrichtung und/oder Querrichtung, versetzt zueinander angeordnet. Sie sind daher asymmetrisch an dem jeweiligen Detektor 400 angebracht. Dies ermöglicht eine wie in Fig. 6 dargestellte engere bzw. dichtere Anordnung der Detektoren nebeneinander, insbesondere in Querrichtung. Ferner wird dadurch ein verbesserter Wärmetransport in der Mitte des Keramikträgers eines Detektors 400 ermöglicht.

Wie in Fig. 6 zu erkennen ist, können die Detektoren 400 einen zeilenförmigen lichtempfindlichen Chip aufweisen. Der zeilenförmige lichtempfindliche Chip kann beispielsweise in seiner Längsrichtung eine Zeile 404, wie Pixelzeile 404, mit einer Vielzahl von Pixeln aufweisen (in Fig. 6 in den beiden oberen Detektoren 400 dargestellt). Das optoelektronische Element kann zusätzlich oder alternativ eine Anzahl von in seiner Querrichtung parallel zueinander angeordneten Subzeilen 406, wie Subpixelzeilen 406, mit jeweils einer Vielzahl von Pixeln aufweisen. Im vorliegenden Ausführungsbeispiel sind, wie im unteren Detektor 400 von Fig. 6 schematisch dargestellt, zwei Subpixelzeilen 406 vorgesehen. Die Subpixelzeilen 406 sind so ausgebildet und eingerichtet, um im Betrieb des Detektors 400 nacheinander zeitversetzt belichtet zu werden. Der Detektor 400 ist dazu ausgebildet, die in den Subzeilen 406 durch Belichtung entstandenen elektrischen Ladungen spaltenweise zu integrieren, insbesondere, aufzuintegrieren.

Im Übrigen wird ergänzend insbesondere auf Fign. 1 bis 5 sowie die zugehörige Beschreibung verwiesen.

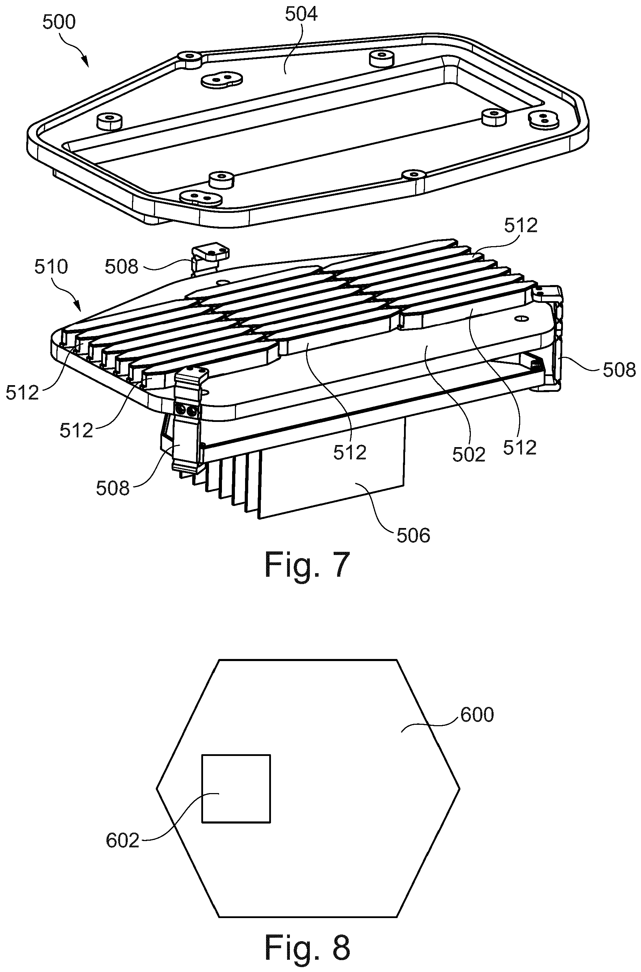

Fig. 7 zeigt ein optoelektronisches Bildaufnahmesystem 500 für einen Raumflugkörper gemäß der Erfindung. Das optoelektronische Bildaufnahmesystem 500 weist eine Trägerplatte 502, einen Anschlussrahmen 504, eine Elektronik 506 und eine isostatische Aufhängung 508 auf. Die Trägerplatte 502, der Anschlussrahmen 504 und die Elektronik 506 sind mittels der isostatischen Aufhängung 508 miteinander verbunden. Die Trägerplatte 502 definiert eine Bildebene bzw. Fokalebene. Das optoelektronische Bildaufnahmesystem 500 weist ferner eine Anordnung 510 von mehreren Detektoren 512 zur Bildaufnahme auf. Jeder Detektor 512 kann wie vorstehend und/oder nachfolgend beschrieben ausgebildet sein. Die Anordnung 510 von Detektoren 512 bzw. die Detektoren 512 sind in der Bildebene bzw. Fokalebene einer Optik angeordnet und auf der Trägerplatte 502 fixiert. Die Detektoren 512 sind in Querrichtung nebeneinander angeordnet. In Längsrichtung sind die Detektoren 512 nebeneinander/hintereinander und in deren Endbereichen abschnittsweise überlappend angeordnet. Dabei überlappen sich die jeweiligen Pixelzeilen 404 und/oder Subpixelzeilen 406 der Detektoren 512 in Längsrichtung abschnittsweise im Endbereich der jeweiligen Trägersubstrate. Ferner sind die jeweiligen Pixelzeilen 404 und/oder Subpixelzeilen 406 der Detektoren 512 in Querrichtung im Endbereich der jeweiligen Trägersubstrate abschnittsweise hintereinander angeordnet. Aufgrund der Abschrägung in den Endbereichen der Detektoren 512 kann die überlappende Anordnung in Längsrichtung realisiert werden, um die Detektoren dichter bzw. enger zueinander anzuordnen. Die Detektoren 512 und/oder Pixelzeilen 404 und/oder Subpixelzeilen 406 sind dazu ausgebildet, unterschiedliche Spektralbereiche zu erfassen.

Der Anschlussrahmen 504 ist oberhalb der Trägerplatte 502 und Detektoren 512 angeordnet. An dem Anschlussrahmen 504 kann eine Optik fixiert werden. Die Optik kann auf wenigstens einen Detektor 512 oder auf alle Detektoren 512 gleichzeitig oder abwechselnd bzw. auf die Bildebene und/oder Fokalebene fokussieren. Die Elektronik 506 ist unterhalb der Trägerplatte 502 und damit auf der den Detektoren 512 gegenüberliegenden Seite der Trägerplatte 502 angeordnet.

Im Übrigen wird ergänzend insbesondere auf Fign. 1 bis 6 sowie die zugehörige Beschreibung verwiesen.

Fig. 8 zeigt schematisch einen Raumflugkörper 600 mit einem optoelektronischen Bildaufnahmesystem 602. Das optoelektronische Bildaufnahmesystem 602 kann wenigstens einen Detektor aufweisen und wie vorstehend und/oder nachfolgend beschrieben ausgebildet sein. Der wenigstens eine Detektor kann wie vorstehend und/oder nachfolgend beschrieben ausgebildet sein.

Der Raumflugkörper 600 kann ein Satellit oder eine Raumsonde zur hochauflösenden Erdbeobachtung sein. Der Raumflugkörper 600 ist dazu ausgebildet, sich im Weltraum, insbesondere entlang einer Erdumlaufbahn, zu bewegen und dorthin gebracht zu werden. Der Raumflugkörper 600 kann einen Antrieb, wie Bremsdüsen und/oder Steuerdüsen oder dergleichen, aufweisen.

**Im** Übrigen wird ergänzend insbesondere auf Fign. 1 bis 7 sowie die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Detektor
- 102: Trägersubstrat
- 104: Endbereiche
- 106: Längsrichtung
- 108: schräge Seitenflächen
- 109: Querachse
- 110: Schutzglas
- 112: Durchbrüche
- 114: optische Module
- 116: elektrische Kontaktierung

- 200: Detektor
- 202: Trägersubstrat
- 204: Endbereich
- 206: schräge Seitenflächen
- 208: gleichschenkliges Trapez
- 210: lichtempfindlicher Chip
- 212: Spektralfilter
- 214: passive Schaltungselemente
- 216: Schutzglas
- 218: innerer Bereich des Schutzglases
- 220: äußerer Bereich des Schutzglases
- 222: integrierte Signalverarbeitungs- und Ausleseschaltung
- 224: Durchbrüche
- 226: optische Module
- 228: Glasfaseranschluss
- 230: elektrische Kontaktierungen

- 300: Detektor
- 302: Keramiksubstrat
- 304: integrierte Signalverarbeitungs- und Ausleseschaltung
- 306: lichtempfindlicher Chip
- 308: passive Schaltungselemente
- 310: Spektralfilter
- 312: Schutzscheibe
- 314: optisch undurchlässige Bereiche
- 316: optisch transparenter Füllstoff
- 318: Anschluss
- 320: optische Anschlussmodule

- 400: Detektor
- 402: elektrische Kontaktierungen
- 404: Pixelzeile
- 406: Subpixelzeile

- 500: Optoelektronisches Bildaufnahmesystem
- 502: Trägerplatte
- 504: Anschlussrahmen
- 506: Elektronik
- 508: isostatische Aufhängung
- 510: Anordnung von Detektoren
- 512: Detektoren

- 600: Raumflugkörper
- 602: Optoelektronisches Bildaufnahmesystem

## Patentansprüche

1. Optoelektronisches Bildaufnahmesystem (500, 602) für einen Raumflugkörper (600), mit einer Trägerplatte (502) und mehreren Detektoren (100, 200, 300, 400, 512), wobei jeder Detektor (100, 200, 300, 400, 512) ein Trägersubstrat (102, 202, 302), und ein am Trägersubstrat (102, 202, 302) angeordnetes optoelektronisches Element (210, 306) aufweist, wobei das Trägersubstrat (102, 202, 302)zumindest in einem Endbereich (104, 204) zumindest eine schräg zur Längsrichtung (106) des Trägersubstrats (102, 202, 302) verlaufende Seitenfläche (108, 206) aufweist, wobei sich zumindest ein Endbereich (104, 204) des Trägersubstrats (102, 202, 302) im, die Querachse (109) aufweisenden Längsschnitt gesehen verjüngt, wobei das optoelektronische Element (210, 306) in seiner Längsrichtung und/oder in Längsrichtung des Trägersubstrats (102, 202, 302), eine Zeile (404) mit einer Vielzahl von Pixeln, wie Pixelzeile (404), aufweist.

2. Optoelektronisches Bildaufnahmesystem (500, 602) nach Anspruch 1, **dadurch gekennzeichnet, dass** die zumindest eine schräg verlaufende Seitenfläche (108, 206) nach innen abfallend ist, wobei eine Erstreckungsrichtung der zumindest einen schräg verlaufenden Seitenfläche (108, 206) mit der Längsrichtung und/oder Längsachse des Trägersubstrats (102, 202, 302) einen Winkel einschließt.

3. Optoelektronisches Bildaufnahmesystem (500, 602) nach wenigstens einem der vorhergehenden Ansprüche, **dadurch gekennzeichnet, dass** sich der zumindest eine Endbereich (104, 204) des Trägersubstrats (102, 202, 302) im, die Querachse (109) aufweisenden Längsschnitt gesehen trapezförmig, dreieckförmig oder kegelförmig verjüngt.

4. Optoelektronisches Bildaufnahmesystem (500, 602) nach wenigstens einem der vorhergehenden Ansprüche, **dadurch gekennzeichnet, dass** der zumindest eine Endbereich (104, 204) des Trägersubstrats (102, 202, 302) im, die Querachse (109) aufweisenden Längsschnitt gesehen im Wesentlichen die Form eines rechtwinkligen oder gleichschenkligen Trapezes (208) aufweist.

5. Optoelektronisches Bildaufnahmesystem (500, 602) nach wenigstens einem der vorhergehenden Ansprüche, **dadurch gekennzeichnet, dass** zumindest in dem Endbereich (104, 204) des Trägersubstrats (102, 202, 302) zwei schräg zur Längsrichtung (106) des Trägersubstrats (102, 202, 302) verlaufende Seitenflächen (108, 206) vorgesehen sind, die, insbesondere in Querrichtung (109) des Trägersubstrats (102, 202, 302), gegenüberliegend angeordnet sind.

6. Optoelektronisches Bildaufnahmesystem (500, 602) nach wenigstens einem der vorhergehenden Ansprüche, **dadurch gekennzeichnet, dass** die beiden in Längsrichtung (106) gegenüberliegenden Endbereiche (104, 204) des Trägersubstrats (102, 202, 302) jeweils zwei schräg zur Längsrichtung (106) des Trägersubstrats (102, 202, 302) verlaufende Seitenflächen (108, 206) aufweisen.

7. Optoelektronisches Bildaufnahmesystem (500, 602) nach wenigstens einem der vorhergehenden Ansprüche, **dadurch gekennzeichnet, dass** das optoelektronische Element (210, 306) sich im Wesentlichen in Längsrichtung (106) des Trägersubstrats (102, 202, 302) erstreckt.

8. Optoelektronisches Bildaufnahmesystem (500, 602) nach wenigstens einem der vorhergehenden Ansprüche, **dadurch gekennzeichnet, dass** das optoelektronische Element (210, 306) ein lichtempfindlicher Chip ist.

9. Optoelektronisches Bildaufnahmesystem (500, 602) nach wenigstens einem der vorhergehenden Ansprüche, **dadurch gekennzeichnet, dass** das optoelektronische Element (210, 306), insbesondere in seiner Querrichtung und/oder in Querrichtung des Trägersubstrats, parallel zueinander angeordnete Subzeilen (406) mit jeweils einer Vielzahl von Pixeln, wie Subpixelzeilen (406), aufweist, und/oder dass Subzeilen (406) so ausgebildet und eingerichtet sind, um zeitversetzt belichtet zu werden und/oder der Detektor (100, 200, 300, 400, 512) dazu ausgebildet ist, die in den Subzeilen (406) durch Belichtung entstandenen elektrischen Ladungen spaltenweise zu integrieren, insbesondere aufzuintegrieren.

10. Optoelektronisches Bildaufnahmesystem (500, 602) nach wenigstens einem der vorhergehenden Ansprüche, **dadurch gekennzeichnet, dass** der Detektor (100, 200, 300, 400, 512) ein Filterelement (212, 310) aufweist, das direkt auf dem optoelektronischen Element (210, 306) oder von diesem beabstandet angeordnet ist.

11. Optoelektronisches Bildaufnahmesystem (500, 602) nach wenigstens einem der vorhergehenden Ansprüche, **dadurch gekennzeichnet, dass** zwischen dem optoelektronischen Element (210, 306) und dem Trägersubstrat (102, 202, 302) eine integrierte Signalverarbeitungs- und/oder Ausleseschaltung (222, 304) angeordnet ist, die mit dem optoelektronischen Element (210, 306) verbunden ist.

12. Optoelektronisches Bildaufnahmesystem (500, 602) nach Anspruch 11, **dadurch gekennzeichnet, dass** die Signalverarbeitungs- und/oder Ausleseschaltung (222, 304) dazu ausgebildet ist, die im optoelektronischen Element (210, 306) durch Licht erzeugten elektrischen Signale zu verarbeiten und/oder weiterzuleiten.

13. Optoelektronisches Bildaufnahmesystem (500, 602) nach Anspruch 11 oder 12, **dadurch gekennzeichnet, dass** die Signalverarbeitungs- und/oder Ausleseschaltung (222, 304) dazu ausgebildet ist, die im optoelektronischen Element (210, 306) durch Licht erzeugten analogen elektrischen Signale zu digitalen Signalen zu wandeln.

14. Optoelektronisches Bildaufnahmesystem (500, 602) nach wenigstens einem der vorhergehenden Ansprüche 11 bis 13, **dadurch gekennzeichnet, dass** der Detektor (100, 200, 300, 400, 512) im Wesentlichen unterhalb der Signalverarbeitungs- und/oder Ausleseschaltung (222, 304) zumindest ein elektrisches Modul zur Signalübertragung und/oder zumindest ein optisches Modul (114, 226, 320) zur digitalen Signalübertragung aufweist.

15. Optoelektronisches Bildaufnahmesystem (500, 602) nach Anspruch 14, **dadurch gekennzeichnet, dass** das Trägersubstrat (102, 202, 302) zumindest eine elektrische Verbindung, insbesondere Leiterbahn, aufweist, wobei die Signalverarbeitungs- und/oder Ausleseschaltung (222, 304) über die zumindest eine elektrische Verbindung mit dem zumindest einen elektrischen Modul zur Signalübertragung und/oder zumindest einen optischen Modul (114, 226, 320) zur digitalen Signalübertragung verbunden ist.

16. Optoelektronisches Bildaufnahmesystem (500, 602) nach wenigstens einem der vorhergehenden Ansprüche, **dadurch gekennzeichnet, dass** der Detektor (100, 200, 300, 400, 512) zumindest eine elektrische Kontaktierung (116, 230, 402) aufweist, die in einem Randbereich angeordnet ist.

17. Optoelektronisches Bildaufnahmesystem (500, 602) nach wenigstens einem der vorhergehenden Ansprüche, **dadurch gekennzeichnet, dass** das Trägersubstrat (102, 202, 302) im Querschnitt zumindest abschnittsweise im Wesentlichen U- und/oder H-förmig ausgebildet ist.

18. Optoelektronisches Bildaufnahmesystem (500, 602) nach wenigstens einem der vorhergehenden Ansprüche, **dadurch gekennzeichnet, dass** das Trägersubstrat (102, 202, 302) aus einer Keramik hergestellt ist und/oder das Trägersubstrat (102, 202, 302) mittels eines additiven Herstellungsverfahrens bzw. mittels 3D-Druck hergestellt ist.

19. Optoelektronisches Bildaufnahmesystem (500, 602) nach wenigstens einem der vorhergehenden Ansprüche, **dadurch gekennzeichnet, dass** zumindest zwei Detektoren (100, 200, 300, 400, 512) so auf der Trägerplatte (502) angeordnet sind, dass sie sich in Längsrichtung (106)zumindest abschnittsweise, insbesondere im Endbereich (104, 204) des Trägersubstrats (102, 202, 302), überlappen, und/oder dass sich die Zeilen (404) mit einer Vielzahl von Pixeln, wie Pixelzeilen (404), und/oder Subzeilen (406) mit jeweils einer Vielzahl von Pixeln, wie Subpixelzeilen (406), der zumindest zwei Detektoren (100, 200, 300, 400, 512) in Längsrichtung (106) zumindest abschnittsweise, insbesondere im Endbereich (104, 204) des Trägersubstrats (102, 202, 302), überlappen.

20. Optoelektronisches Bildaufnahmesystem (500, 602) nach wenigstens einem der vorhergehenden Ansprüche, **dadurch gekennzeichnet, dass** die Detektoren (100, 200, 300, 400, 512) und/oder Pixelzeilen (404) und/oder Subpixelzeilen (406) dazu ausgebildet sind, unterschiedliche Spektralbereiche zu erfassen.

21. Optoelektronisches Bildaufnahmesystem (500, 602) nach wenigstens einem der vorhergehenden Ansprüche 1, 19 oder 20, aufweisend eine auf den wenigstens einen Detektor (100, 200, 300, 400, 512) und/oder auf eine Bildebene fokussierende Optik.

22. Optoelektronisches Bildaufnahmesystem (500, 602) nach wenigstens einem der vorhergehenden Ansprüche, **dadurch gekennzeichnet, dass** die Detektoren (100, 200, 300, 400, 512) auf der Trägerplatte (502) im Wesentlichen parallel zueinander und in einer Längsrichtung im Wesentlichen hintereinander angeordnet sind.

23. Raumflugkörper (600) mit wenigstens einem optoelektronischen Bildaufnahmesystem (500, 602) nach wenigstens einem der vorhergehenden Ansprüche.

## Claims

1. Optoelectronic image acquisition system (500, 602) for a spacecraft (600), comprising a carrier plate (502) and a plurality of detectors (100, 200, 300, 400, 512), each detector (100, 200, 300, 400, 512) comprising a carrier substrate (102, 202, 302) and an optoelectronic element (210, 306) arranged on the carrier substrate (102, 202, 302), wherein the carrier substrate (102, 202, 302) has at least one side surface (108, 206) at least in one end region (104, 204) extending obliquely to the longitudinal direction (106) of the carrier substrate (102, 202, 302), wherein at least one end region (104, 204) of the carrier substrate (102, 202, 302) is tapered when viewed in the longitudinal section containing the transverse axis (109), wherein the optoelectronic element (210, 306) comprises in its longitudinal direction and/or in the longitudinal direction of the carrier substrate (102, 202, 302), a row (404) with a plurality of pixels, such as a pixel row (404).

2. Optoelectronic image recording system (500, 602) according to claim 1, **characterized in that** the at least one obliquely extending side surface (108, 206) slopes inwardly, wherein an extension direction of the at least one obliquely extending side surface (108, 206) includes an angle with the longitudinal direction and/or longitudinal axis of the carrier substrate (102, 202, 302).

3. Optoelectronic image recording system (500, 602) according to at least one of the preceding claims, **characterized in that** the at least one end region (104, 204) of the carrier substrate (102, 202, 302) is tapered in a trapezoidal, triangular or conical shape when viewed in the longitudinal section containing the transverse axis (109).

4. Optoelectronic image recording system (500, 602) according to at least one of the preceding claims, **characterized in that** the at least one end region (104, 204) of the carrier substrate (102, 202, 302) has, when viewed in the longitudinal section containing the transverse axis (109), essentially the shape of a right-angled or isosceles trapezoid (208).

5. Optoelectronic image recording system (500, 602) according to at least one of the preceding claims, **characterized in that** at least in the end region (104, 204) of the carrier substrate (102, 202, 302) there are provided two side surfaces (108, 206) extending obliquely to the longitudinal direction (106) of the carrier substrate (102, 202, 302), which, in particular in the transverse direction (109) of the carrier substrate (102, 202, 302).

6. Optoelectronic image recording system (500, 602) according to at least one of the preceding claims, **characterized in that** the two end regions (104, 204) of the carrier substrate (102, 202, 302) each have two side surfaces (108, 206) extending obliquely to the longitudinal direction (106) of the carrier substrate (102, 202, 302).

7. Optoelectronic image recording system (500, 602) according to at least one of the preceding claims, **characterized in that** the optoelectronic element (210, 306) extends substantially in the longitudinal direction (106) of the carrier substrate (102, 202, 302).

8. Optoelectronic image recording system (500, 602) according to at least one of the preceding claims, **characterized in that** the optoelectronic element (210, 306) is a photosensitive chip.

9. Optoelectronic image recording system (500, 602) according to at least one of the preceding claims, **characterized in that** the optoelectronic element (210, 306) comprises sublines (406) arranged parallel to each other, in particular in its transverse direction and/or in the transverse direction of the carrier substrate, each with a plurality of pixels, such as subpixel lines (406), and/or sublines (406) are designed and arranged so as to be time-delayed relative to each other and/or the detector (100, 200, 300, 400, 512) is designed to integrate the electrical charges produced in the sublines (406) by exposure in columns, in particular to integrate them.

10. Optoelectronic image recording system (500, 602) according to at least one of the preceding claims, **characterized in that** the detector (100, 200, 300, 400, 512) has a filter element (212, 310) which is arranged directly on the optoelectronic element (210, 306) or at a distance therefrom.

11. Optoelectronic image recording system (500, 602) according to at least one of the preceding claims, **characterized in that** an integrated signal processing and/or readout circuit (222, 304) is arranged between the optoelectronic element (210, 306) and the carrier substrate (102, 202, 302) and is connected to the optoelectronic element (210, 306).

12. Optoelectronic image recording system (500, 602) according to claim 11, **characterized in that** the signal processing and/or readout circuit (222, 304) is designed to process and/or forward the electrical signals generated in the optoelectronic element (210, 306) by light.

13. Optoelectronic image pickup system (500, 602) according to claim 11 or 12, **characterized in that** the signal processing and/or readout circuit (222, 304) is designed to convert the analog electrical signals generated in the optoelectronic element (210, 306) by light into digital signals.

14. Optoelectronic image acquisition system (500, 602) according to at least one of the preceding claims 11 to 13, **characterized in that** the detector (100, 200, 300, 400, 512) has, substantially below the signal processing and/or readout circuit (222, 304), at least one electrical module for signal transmission and/or at least one optical module (114, 226, 320) for digital signal transmission.

15. Optoelectronic image recording system (500, 602) according to claim 14, **characterized in that** the carrier substrate (102, 202, 302) has at least one electrical connection, in particular a conductor track, wherein the signal processing and/or readout circuit (222, 304) is connected via the at least one electrical connection to the at least one electrical module for analog signal transmission and/or at least one optical module (114, 226, 320) for digital signal transmission.

16. Optoelectronic image recording system (500, 602) according to at least one of the preceding claims, **characterized in that** the detector (100, 200, 300, 400, 512) has at least one electrical contact (116, 230, 402) which is arranged in an edge region.

17. Optoelectronic image pickup system (500, 602) according to at least one of the preceding claims, **characterized in that** the carrier substrate (102, 202, 302) is designed in cross section to be essentially U-shaped and/or H-shaped, at least in sections.

18. Optoelectronic image pickup system (500, 602) according to at least one of the preceding claims, **characterized in that** the carrier substrate (102, 202, 302) is made of a ceramic and/or the carrier substrate (102, 202, 302) is produced by means of an additive manufacturing process or by means of 3D printing.

19. Optoelectronic image recording system (500, 602) according to at least one of the preceding claims, **characterized in that** at least two detectors (100, 200, 300, 400, 512) are arranged on the carrier plate (502) in such a way that they overlap in the longitudinal direction (106) at least in sections, in particular in the end region (104, 204) of the carrier substrate (102, 202, 302), and/or that the lines (404) with a plurality of pixels, such as pixel lines (404), and/or sublines (406) with a plurality of pixels, such as subpixel lines (406), of the at least two detectors (100, 200, 300, 400, 512) overlap in the longitudinal direction (106) at least in sections, in particular in the end region (104, 204) of the carrier substrate (102, 202, 302).

20. Optoelectronic image recording system (500, 602) according to at least one of the preceding claims, **characterized in that** the detectors (100, 200, 300, 400, 512) and/or pixel lines (404) and/or subpixel lines (406) are designed to detect different spectral ranges.

21. Optoelectronic image recording system (500, 602) according to at least one of the preceding claims 1, 19 or 20, comprising optics focusing on the at least one detector (100, 200, 300, 400, 512) and/or on an image plane.

22. Optoelectronic image recording system (500, 602) according to at least one of the preceding claims, **characterized in that** the detectors (100, 200, 300, 400, 512) are arranged on the carrier plate (502) substantially parallel to one another and substantially one behind the other in a longitudinal direction.

23. Spacecraft (600) with at least one optoelectronic image acquisition system (500, 602) according to at least one of the preceding claims.

## Revendications

1. Système optoélectronique d'enregistrement d'images (500, 602) pour un engin spatial (600), comprenant une plaque support (502) et plusieurs détecteurs (100, 200, 300, 400, 512), chaque détecteur (100, 200, 300, 400, 512) comportant un substrat de support (102, 202, 302) et un élément optoélectronique (210, 306) disposé sur le substrat de support (102, 202, 302), le substrat de support (102, 202, 302) comportant, au moins dans une zone d'extrémité (104, 204) au moins une surface latérale (108, 206) s'étendant obliquement par rapport à la direction longitudinale (106) du substrat de support (102, 202, 302), au moins une zone d'extrémité (104, 204) du substrat de support (102, 202, 302) est effilée dans la coupe longitudinale présentant l'axe transversal (109), l'élément optoélectronique (210, 306) présentant, dans sa direction longitudinale et/ou dans la direction longitudinale du substrat de support (102, 202, 302), une ligne (404) avec une pluralité de pixels, telle qu'une ligne de pixels (404).

2. Système optoélectronique d'enregistrement d'images (500, 602) selon la revendication 1, **caractérisé en ce que** l'au moins une surface latérale inclinée (108, 206) est inclinée vers l'intérieur, une direction d'extension de l'au moins une surface latérale inclinée (108, 206) formant un angle avec la direction longitudinale et/ou l'axe longitudinal du substrat de support (102, 202, 302.

3. Système optoélectronique d'enregistrement d'images (500, 602) selon au moins l'une des revendications précédentes, **caractérisé en ce que** l'au moins une zone d'extrémité (104, 204) du substrat de support (102, 202, 302) est de forme trapézoïdale, triangulaire ou conique lorsqu'on la regarde dans la section longitudinale présentant l'axe transversal (109).

4. Système optoélectronique d'enregistrement d'images (500, 602) selon au moins l'une des revendications précédentes, **caractérisé en ce que** la au moins une zone d'extrémité (104, 204) du substrat de support (102, 202, 302) présente, vue dans la coupe longitudinale présentant l'axe transversal (109), essentiellement la forme d'un trapèze rectangle ou isocèle (208).

5. Système optoélectronique d'enregistrement d'images (500, 602) selon au moins l'une des revendications précédentes, **caractérisé en ce qu'**au moins dans la zone d'extrémité (104, 204) du substrat de support (102, 202, 302), deux surfaces latérales (108, 206) s'étendant obliquement par rapport à la direction longitudinale (106) du substrat de support (102, 202, 302) sont prévues, lesquelles sont disposées de manière opposée, en particulier dans la direction transversale (109) du substrat de support (102, 202, 302).

6. Système optoélectronique d'enregistrement d'images (500, 602) selon au moins l'une des revendications précédentes, **caractérisé en ce que** les deux zones d'extrémité (104, 204) du substrat de support (102, 202, 302) comportent chacune deux surfaces latérales (108, 206) s'étendant obliquement par rapport à la direction longitudinale (106) du substrat de support (102, 202, 302).

7. Système optoélectronique d'enregistrement d'images (500, 602) selon au moins l'une des revendications précédentes, **caractérisé en ce que** l'élément optoélectronique (210, 306) s'étend essentiellement dans la direction longitudinale (106) du substrat de support (102, 202, 302).

8. Système optoélectronique d'enregistrement d'images (500, 602) selon au moins l'une des revendications précédentes, **caractérisé en ce que** l'élément optoélectronique (210, 306) est une puce photosensible.

9. Système optoélectronique d'enregistrement d'images (500, 602) selon au moins l'une des revendications précédentes, **caractérisé en ce que** l', l'élément optoélectronique (210, 306), en particulier dans sa direction transversale et/ou dans la direction transversale du substrat de support, comporte des sous-lignes (406) disposées parallèlement les unes aux autres, chacune comportant une pluralité de pixels, telles que des lignes de sous-pixels (406), et/ou **en ce que** les sous-lignes (406) sont conçues et agencées de manière à être décalées dans le temps. (406) disposées parallèlement les unes aux autres, comportant chacune une pluralité de pixels, telles que des lignes de sous-pixels (406), et/ou **en ce que** des sous-lignes (406) sont conçues et agencées de manière à être exposées de manière décalée dans le temps et/ou le détecteur (100, 200, 300, 400, 512) est conçu pour intégrer, en particulier pour intégrer, les charges électriques générées dans les sous-lignes (406) par exposition.

10. Système optoélectronique d'enregistrement d'images (500, 602) selon au moins l'une des revendications précédentes, **caractérisé en ce que** le détecteur (100, 200, 300, 400, 512) comporte un élément filtrant (212, 310) qui est disposé directement sur l'élément optoélectronique (210, 306) ou à distance de celui-ci.

11. Système optoélectronique d'enregistrement d'images (500, 602) selon au moins l'une des revendications précédentes, **caractérisé en ce qu'**entre l'élément optoélectronique (210, 306) et le substrat de support (102, 202, 302, qui est relié à l'élément optoélectronique (210, 306).

12. Système optoélectronique d'enregistrement d'images (500, 602) selon la revendication 11, **caractérisé en ce que** le circuit de traitement et/ou de lecture de signaux (222, 304) est conçu pour traiter et/ou transmettre les signaux électriques générés dans l'élément optoélectronique (210, 306) par la lumière.

13. Système optoélectronique d'enregistrement d'images (500, 602) selon la revendication 11 ou 12, **caractérisé en ce que** le circuit de traitement et/ou de lecture de signaux (222, 304) est conçu pour convertir les signaux électriques analogiques générés dans l'élément optoélectronique (210, 306) par la lumière en signaux numériques.

14. Système optoélectronique d'enregistrement d'images (500, 602) selon au moins l'une des revendications précédentes 11 à 13, **caractérisé en ce que** le détecteur (100, 200, 300, 400, 512) comporte, essentiellement en dessous du circuit de traitement et/ou de lecture des signaux (222, 304), au moins un module électrique pour la transmission des signaux et/ou au moins un module optique (114, 226, 320) pour la transmission numérique des signaux.

15. Système optoélectronique d'enregistrement d'images (500, 602) selon la revendication 14, **caractérisé en ce que** le substrat de support (102, 202, 302) comporte au moins une connexion électrique, en particulier une piste conductrice, le circuit de traitement et/ou de lecture de signaux (222, 304) étant relié, par l'intermédiaire de la au moins une connexion électrique, au moins un module électrique pour la transmission d' s et/ou au moins un module optique (114, 226, 320) pour la transmission numérique de signaux.

16. Système optoélectronique d'enregistrement d'images (500, 602) selon au moins l'une des revendications précédentes, **caractérisé en ce que** le détecteur (100, 200, 300, 400, 512) comporte au moins un contact électrique (116, 230, 402) qui est disposé dans une zone périphérique.

17. Système optoélectronique d'enregistrement d'images (500, 602) selon au moins l'une des revendications précédentes, **caractérisé en ce que** le substrat de support (102, 202, 302) est réalisé en section transversale, au moins par sections, essentiellement en forme de U et/ou de H.

18. Système optoélectronique d'enregistrement d'images (500, 602) selon au moins l'une des revendications précédentes, **caractérisé en ce que** le substrat de support (102, 202, 302) est fabriqué à partir d'une céramique et/ou le substrat de support (102, 202, 302) est fabriqué au moyen d'un procédé de fabrication additif ou au moyen d'une impression 3D.

19. Système optoélectronique d'enregistrement d'images (500, 602) selon au moins l'une des revendications précédentes, **caractérisé en ce qu'**au moins deux détecteurs (100, 200, 300, 400, 512) sont disposés sur la plaque de support (502) de telle sorte qu'ils se chevauchent au moins par sections, en particulier dans la zone d'extrémité (104, 204) du substrat de support (102, 202, 302), et/ou **en ce que** les lignes (404) comportant une pluralité de pixels, telles que des lignes de pixels (404), et/ou des sous-lignes (406) comportant chacune une pluralité de pixels, telles que des sous-lignes de pixels (406), des au moins deux détecteurs (100, 200, 300, 400, 512) se chevauchent dans la direction longitudinale (106) au moins par sections, en particulier dans la zone d'extrémité (104, 204) du substrat de support (102, 202, 302).

20. Système optoélectronique d'enregistrement d'images (500, 602) selon au moins l'une des revendications précédentes, **caractérisé en ce que** les détecteurs (100, 200, 300, 400, 512) et/ou des lignes de pixels (404) et/ou des lignes de sous-pixels (406) sont conçus pour détecter différentes gammes spectrales.

21. Système optoélectronique d'enregistrement d'images (500, 602) selon au moins l'une des revendications précédentes 1, 19 ou 20, comprenant une optique focalisant sur au moins un détecteur (100, 200, 300, 400, 512) et/ou sur un plan image.

22. Système optoélectronique d'enregistrement d'images (500, 602) selon au moins l'une des revendications précédentes, **caractérisé en ce que** les détecteurs (100, 200, 300, 400, 512) sont disposés sur la plaque de support (502) de manière sensiblement parallèle les uns aux autres et sensiblement les uns derrière les autres dans une direction longitudinale.

23. Engin spatial (600) comportant au moins un système optoélectronique d'enregistrement d'images (500, 602) selon au moins l'une des revendications précédentes.
